# EUROPEAN PATENT SPECIFICATION

(11) **EP 2 704 397 B1**
(45) Date of publication and mention of the grant of the patent: **27.04.2016**
(21) Application number: 13184204.9
(22) Date of filing: 25.08.2009
(51) Int. Cl.: H04L 29/06

(54) **PRESENTING MEDIA CONTENT OBTAINED FROM MULTIPLE SOURCES**
Präsentation von Medieninhalten aus mehreren Quellen
Présentation d'un contenu multimédia provenant de sources multiples

(30) Priority: 08.09.2008 US 95306 P; 31.12.2008 US 141915 P; 31.12.2008 US 141918 P; 31.12.2008 US 141921 P; 20.03.2009 US 408456; 20.03.2009 US 408460; 18.08.2009 US 543278
(43) Date of publication of application: 05.03.2014
(62) Divisional of application: 09791887.4
(73) Proprietor: Sling Media, Inc., Foster City, CA 94404 (US)
(72) Inventor: Krikorian, Blake Gary, Hillsborough, CA 94010 (US); Feinstein, Matthew, Palo Alto, CA 94301 (US)
(74) Representative: Sadler, Peter Frederick

(56) References cited:
- EP-A2- 0 810 790
- US-A1- 2004 139 233
- US-A1- 2006 031 889
- HSIN-TA CHIAO ET AL: "Video Everywhere Through a Scalable IP-Streaming Service Framework", WIRELESS COMMUNICATION SYSTEMS, 2006. ISWCS '06. 3RD INTERNATIONA L SYMPOSIUM ON, IEEE, PI, 1 September 2006 (2006-09-01), pages 190-194, XP031152056, ISBN: 978-1-4244-0397-4

## Description

### TECHNICAL FIELD

The present disclosure generally relates to presentation of media content from one or more sources on a television or other display.

### BACKGROUND

In the past, consumers generally viewed television programming as it was received live from a broadcast, cable or satellite source. As analog and digital recording devices (e.g., video cassette recorders, as well as digital/personal video recorders) became more prevalent, consumers were increasingly able to shift their television viewing to more convenient viewing times. Even more recently, the ability to "place shift" television viewing from one location to another has become more widespread. Using the various SLINGBOX products available from Sling Media of Foster City, California, for example, consumers are able remotely view television programming or other video signals that are provided by a receiver, media player, recorder or other media source that is physically located at a different place than the viewer. Traditionally, content has been placeshifted primarily from a receiver or recorder over a digital network to a personal computer, wireless phone or other portable device. Viewing placeshifted content at a remotely-located television, however, has been difficult in the past because most televisions do not have network connectivity or other mechanisms for communicating with remotely-located media sources.

In addition, consumers are showing increased interest in non-traditional sources of content. Streaming video received via the Internet or another network, for example, is becoming very commonplace; such content is typically enjoyed on a computer display, however, rather than on a television set. Moreover, many consumers now have video cameras or other equipment for generating their own content. Much of this content is in digital format that is most readily viewed on a personal computer or other digital computing device.

As a result, it is desirable to create systems, methods and/or devices that are able to select media content that is available from various sources for presentation on a conventional television or similar display. In particular, it is desirable to create interfaces for selecting and presenting content available from multiple sources. These and other desirable features and characteristics will become apparent from the subsequent detailed description and the appended claims, taken in conjunction with the accompanying drawings and this background section.

US Patent Application US 2006/0031889 describes a video processing system that includes simultaneous multiple outputs each having unique formats. Simultaneous delivery of video / audio to pluralities of different video systems is supported, whereby each of the video sources is configured with a video processing system. Each video processing system has access to a video program in a first format, which is used to create versions of the video program in different formats. Each video processing system then delivers the converted content to the various video systems for display. Most selection of, and conversion of, frames of raw video data into a compressed media stream is described. Similarly, US Patent Application US 2004/0139233 describes a media processing system that supports different media formats. In particular, a server based approach to transcoding is adopted whereby media content is re-formatted / transcoded at a server based upon the capabilities of an end user device. Transcoding is performed on received media streams. There is no disclosure of transcoding frames of raw video data that has been captured based upon a user identification of a portion of a display screen.

### BRIEF SUMMARY

According to various exemplary embodiments, methods, systems and devices integrate media content provided by of sources for presentation on a television or other external display. A network interface to a digital network and a display interface to the external display is provided. A processor is configured to receive the media content from each of the sources via the network interface in a first format, to convert the media content a displayable format different from the first format for display on the external device, and to provide the media content in the displayable format to the display interface for presentation on the external display.

Systems and methods integrate media content provided by of sources for presentation on a television or other external display. A network interface to a digital network and a display interface to the external display is provided. A processor is configured to receive the media content from each of the sources via the network interface in a first format, to convert the media content a displayable format different from the first format for display on the external device, and to provide the media content in the displayable format to the display interface for presentation on the external display.

In other embodiments, a method of presenting media content received via a network on a display is provided. The method comprises receiving a command from a user via a wireless interface, transmitting the command across the network to a remotely-located placeshifter to adjust a media stream provided by the placeshifter, receiving the adjusted media stream from the placeshifter via the network, and presenting the adjusted media stream on the display.

In still other embodiments, a system for presenting media streams received from a plurality of media sources on a display is provided, wherein the plurality of media sources comprises a placeshifting device remotely located across a digital network, a placeshifting application executing on a personal computer that is remotely located across the digital network, and local storage medium. The system comprises a network interface to the digital network, a storage interface to the local storage medium, a wireless receiver configured to receive viewer commands transmitted from a wireless remote control, a display interface to the display, and a processor. The processor is configured to receive the viewer commands via the wireless receiver, to process the commands to select a media stream available from any of the plurality of media sources and to adjust the media stream provided by the selected media source in response to the viewer commands, and to present the adjusted media stream to the viewer via the display interface.

Various other embodiments, aspects and other features are described in more detail below.

### BRIEF DESCRIPTION OF THE DRAWING FIGURES

Exemplary embodiments will hereinafter be described in conjunction with the following drawing figures, wherein like numerals denote like elements, and
FIG. 1 is a diagram of an exemplary placeshifting system.
FIG. 2A is a block diagram of an exemplary media catcher system.
FIG. 2B is a block diagram of an exemplary computer system used for projecting a media stream.
FIG. 3A is a data flow diagram of an exemplary media stream control process.
FIG. 3B is a flowchart of an exemplary process for place shifting a media stream.
FIGS. 4-8 are displays of exemplary user interface images.
FIG. 9 is a flowchart of an exemplary process for implementing an exemplary interface.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

Various embodiments of a media catcher device allow the customers/users to connect multiple media experiences on a common television or other display. The catcher device may be able to receive network media streams from remotely-located placeshifting devices, for example, as well as media streams from any sort of personal computers, web servers and/or other network sources. In various further embodiments, the media catcher device is also able to process content that is stored locally on a hard disk, flash drive or other digital storage device, or on a virtual drive that appears local, but actually resides on a remote server. The media catcher device therefore allows the user to access audio/visual content from multiple sources, including sources that are remotely located, on a common television or other display.

The media catcher device could be used in any number of settings. It could be used, for example, to view content that is physically stored in another room, at a remotely-located home or office, or indeed anywhere that network access can be provided. A person could view programming from a digital video recorder located at home, for example, on a television located at another home, or at work, or at any other location. In other implementations, a person could use the media catcher device to view programming that is stored or hosted from any number of other devices, servers or other components. In still other embodiments a viewer could use the media catcher to view streaming video or other content that is typically viewed on a computer system, but on a television or other remote display.

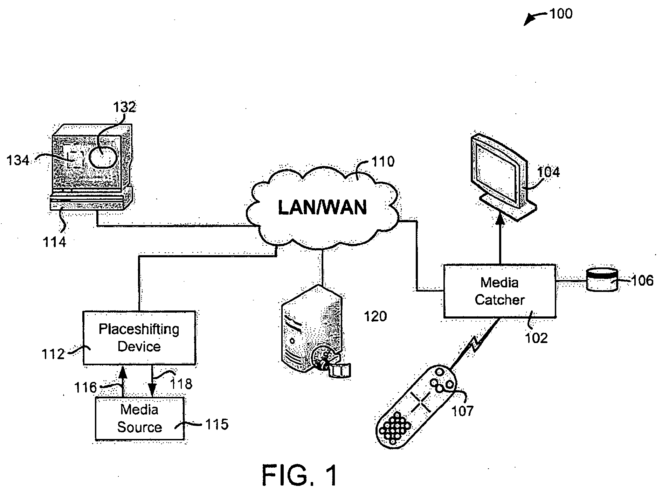

Turning now to the drawing figures and with initial reference to FIG. 1, an exemplary placeshifting system 100 suitably includes a media catcher device 102 that communicates with a placeshifting device 112, a personal computer 114, and/or any number of content servers 120 via network 110. Additionally, media catcher 102 may receive content from a locally-connected (or virtually connected) storage device 106, as appropriate. Media content received from any of the various sources is suitably processed at media catcher 102 to create the desired user experience and presented for display on display 104.

Media catcher device 102 is any device or component capable of receiving content from various sources and of processing the received content as appropriate to produce a desired experience for the user. Generally speaking, media catcher 102 is responsive to user commands received via a remote control 107 or other input device to obtain desired content from any number of content sources, and to format the obtained content for display to the user.

Many different media-shifting scenarios could be formulated based upon available computing and communications resources. In various embodiments, consumers may wish to placeshift content within a home, office or other structure, such as from a placeshifting device 112 to media catcher 102 located in another room. In such embodiments, the content stream will typically be provided over a wired and/or wireless local area network operating within the structure. In other embodiments, consumers may wish to placeshift content over a broadband or similar network connection from a primary location to a media catcher device 102 located in a second home, office, hotel or other remote location.

To that end, network 110 is any digital or other communications network capable of transmitting messages between senders and receivers. In various embodiments, network 110 may represent a wide area network, a local area network, and/or any combination of wide and local area networks. In embodiments wherein media catcher 102 is located at a different building or other remote location from a desired content source, for example, network 110 can include any number of public or private data connections, links or networks supporting any number of communications protocols. Network 110 may include the Internet, for example, or any other network based upon TCP/IP or other conventional protocols. In many embodiments, system 100 is wholly or largely implemented within a relatively small geographical area (e.g., within a home or other structure). In such embodiments, network 110 may represent a conventional local area network, such as one or more IEEE 802.3 and/or IEEE 802.11 networks. Network 110 as shown in FIG. 1, then, is intended to broadly encompass any digital communications network(s), systems or architectures for transmitting data between the various components of system 100.

As noted above, media catcher device 102 is able to receive media content from any number of content sources via network 110. In various embodiments, media catcher 102 receives a media stream from one or more placeshifting devices 112. Placeshifting device 112 suitably packetizes media content 116 received from a media source 115 for transmission over communications network 110. To that end, placeshifting device 112 is any component, hardware, software logic and/or the like capable of transmitting a packetized stream of media content over network 110. Although FIG. 1 shows only a single placeshifting device 112, in practice system 100 may include any number of placeshifting devices 112 and/or media sources 115, each of which may be able to stream media content to media catcher 102.

In various embodiments, each placeshifting device 112 incorporates suitable transcoder logic to convert audio/video or other media data 116 into a packetized format (e.g., MPEG, QuickTime, Windows Media and/or the like) that can be transmitted over network 110. The media data 116 may be in any format, and may be received from any source 115 such as any digital or analog recording device (e.g., a digital video recorder); any broadcast, cable or satellite television programming source; any "video-on-demand" or similar source; a player for any sort of digital video disk (DVD) or other removable media; a security or other video camera; and/or the like. Placeshifting device 112 may also provide control instructions to one or more media sources 115 using any sort of infrared, radio frequency, or other signals 118. Such signals 118 may be provided, for example, from an "IR Blaster" or similar feature that emulates infrared or other RF instructions provided from a remote control associated with the media source 115. U.S. Patent Publication No. 2006/0095471 describes one example of a placeshifting encoder, although the concepts described herein could be used in conjunction with products and services available from any source, including those available from Sling Media of Foster City, California and others.

Media catcher 102 is also able to receive content from other sources via network 110. In various embodiments, computer 114 executes software that is able to provide a video stream to media catcher 102 over network 110. The video stream may be, for example, a Windows Media, Quicktime and/or MPEG stream, although other formats could be equivalently used. In various embodiments, computer 114 executes a software program that encodes and transmits a portion of a screen display viewable on a monitor associated with computer 114. Such embodiments may, for example, encode a portion of a screen display bitmap into a streaming format that can be transmitted on the media. In such embodiments, a media file or clip that would ordinarily be viewed on the computer display can be simultaneously (or alternately) transmitted to media catcher 102 for presentation on display 104. In other embodiments, computer 114 transmits media data in any sort of streaming, file-based, batch or other format to media catcher 102 for display as desired, as described more fully below.

System 100 may also include any number of servers 120 that are each capable of providing media content to media catcher 102, or of at least directing media catcher 102 to media content, as appropriate. In various embodiments, server 120 is a conventional Internet server that interacts with a browser or viewer application executing on media catcher 102 to provide images, audio, video and/or other content as desired. In further embodiments, server 120 is a web server that includes links to other content servers available to the media catcher 102. In such embodiments, a user may direct the media catcher 102 to initially contact server 120, and subsequently direct media catcher 102 to follow hypertext markup language (HTML) or other links provided by server 120. Many different interface options are available across a wide array of equivalent implementations to allow media catcher to obtain media content from any number of servers 120.

In various embodiments, media catcher 102 additionally communicates with an internal, external, virtual and/or other storage device 106, such as any sort of disk drive, flash memory drive, and/or the like. In such embodiments, users may store media files on storage device 106 for playback on display 104. Such files may include video files, still imagery, audio files and/or any other type of media from any source. A user may keep a collection of home videos, for example, on a hard drive or other storage medium 106 that can be directly or logically connected to media catcher 102.

In operation, then, media catcher 102 is able to obtain media content from various sources, to process the received content for playback, and to provide suitable output signals for presenting the media content on display 104. In one embodiment, media catcher 102 is able to receive encoded media streams from placeshifting device and computer 114, and is additionally able to receive streaming and/or file-based content from server 120 and local storage 106. This content can be received in any of various formats and can be decoded for presentation on display 104. In various embodiments, media catcher 102 provides video output signals to display 104 in any compatible format. In embodiments wherein display 104 is a conventional television, for example, media catcher device 102 may provide video and/or audio output signals in any conventional format, such as component video, composite video, S-video, High-Definition Multimedia Interface (HDMI), Digital Visual Interface (DVI), IEEE 1394, Sony/Philips Digital Interconnect Format (SPDIF), analog and/or digital audio, and/or any other formats as desired. By designing media catcher 102 to support multiple formats and multiple sources of media content, the user is able to conveniently enjoy content from multiple sources on a common display 104.

### AN EXEMPLARY MEDIA CATCHER

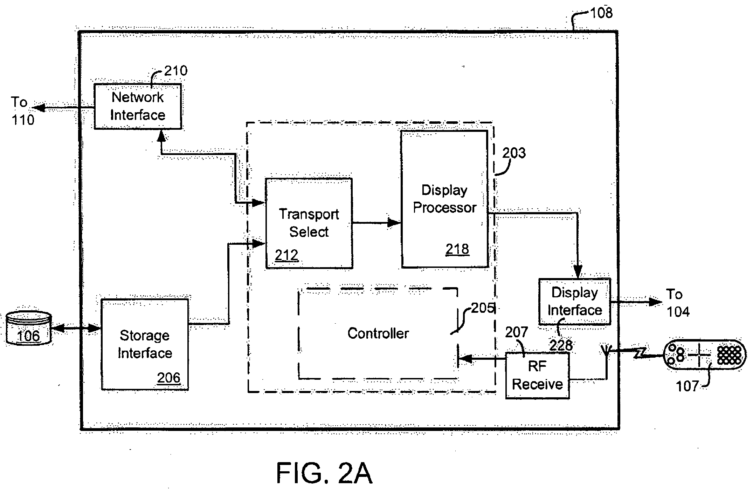

FIG. 2A provides additional detail about an exemplary media catcher device 102 that includes a network interface 210, a storage interface 206, and a display interface 228 as appropriate. FIG. 2A also shows a transport select module, display processor module and control module 205 executing on a common processor 203. Other embodiments may incorporate additional or alternate processing modules from those shown in FIG. 2A, and/or may omit one or more modules shown in FIG. 2A, and/or may organize the various modules in any other manner different from the exemplary arrangement shown in FIG. 2A.

Media catcher device 102 may be logically and physically implemented in any manner. FIG. 2A shows various logical and functional features that may be present in an exemplary device 102; each module shown in the figure may be implemented with any sort of hardware, software, firmware and/or the like. Any of the various modules may be implemented with any sort of general or special purpose integrated circuitry, for example, such as any sort of microprocessor, microcontroller, digital signal processor, programmed array and/or the like. In various embodiments, any number of the modules shown in FIG. 2A may be implemented as part of a "system on a chip" (SoC) system using any suitable processing circuitry under control of any appropriate control logic 205. In such embodiments, control logic 205 executes within an integrated SoC or other processor 203 that may also implement transport selector 212 and display processor 218, and/or any logic that controls network interface 210 and/or storage interface 206, as appropriate. NXP Semiconductors of Eindhoven, Netherlands, for example, produces several models of processors (including the model PNX8950 processor) that are capable of supporting SoC implementations, as do Broadcom Inc., Texas Instruments Inc., Conexant Systems Inc. and many others, although products from any number of other suppliers could be equivalently used. In still other embodiments, various distinct chips, circuits or components may be inter-connected with each other to implement the functions represented in FIG. 2A. Video decoding functions, for example, could be processed on separate circuitry from the control logic 205, and/or any other functions or features could be physically or logically arranged in any other manner from that shown in FIG. 2A. Processor 203 may also operate in conjunction with any conventional memory or other storage, including any sort of random access (e.g., RAM, DRAM or the like), read-only, flash and/or other memory. In an exemplary embodiment, both DRAM (or the like) and flash memory may be provided to facilitate different types of data and instruction storage.

Various embodiments of control logic 205 can include any circuitry, components, hardware, software and/or firmware logic capable of controlling the components and processes operating within device 102. Although FIG. 2A shows control logic 205 as a discrete feature, in practice control logic 205 will typically interact with each of the other modules and components operating within media catcher 102 to direct the operation thereof.

Media catcher 102 includes an appropriate network interface 210 that operates using any implementation of protocols or other features to support communication by device 102 on network 110. In various embodiments, network interface 210 supports conventional LAN, WAN or other protocols (e.g., the TCP/IP or UDP/IP suite of protocols widely used on the Internet) to allow device 102 to communicate on network 110 as desired. Network interface 210 typically interfaces with network 110 using any sort of LAN adapter hardware, such as a conventional network interface card (NIC) or the like provided within device 102. Network interface 210 could be implemented with a conventional ETHERNET controller chip that operates with a conventional electrical transformer to communicate over a conventional RJ45 jack in at least one embodiment, although other embodiments may provide different features, including any sort of wireless interface 210.

Storage interface 206 is any physical, logical and/or other features that can be used to interface with an external storage medium 106 such as a magnetic or optical disk drive, a flash memory card, and/or any other sort of storage as appropriate. In various embodiments, storage interface 206 is a universal serial bus (USB), IEEE 1394 ("Firewire") or other standard interface that allows users to store files at a conventional computer system (e.g., computer 114 in some embodiments) for playback via media catcher 102. In such embodiments, media catcher 102 will typically include a physical interface that can receive the media 106, as well as a logical interface that may be implemented within the SoC or other logical features of device 102 to execute in response to control logic 205. An example of a physical interface that may be present in some embodiments of storage interface 206 is a conventional USB 2.0 interface (which may include appropriate protection from electrostatic discharge and/or over-current conditions), although other embodiments may provide different features.

Storage interface 206 and/or network interface 210 may communicate with processor 203 using any sort of bus or other communications structure. In an exemplary embodiment, communications between storage interface 206, network interface 210 and processor 203 are passed over a conventional data bus, such as a peripheral component interface (PCI) bus or the like. Other embodiments may provide any sort of serial, parallel or other communications, including any sort of intra-chip communication.

When the storage medium 106 is connected to the media catcher 102, the catcher 102 may scan the file tree or other directory structure of medium 106 to identify any compatible files that may be available for playback on catcher 102. Such files may be identified from information contained in a file title, file title extension (e.g., "mov", "mp4", "wma", etc.), file header, metadata stored on media 106, and/or from any other source. In still further embodiments, files stored on medium 106 may be stored in any sort of standard or proprietary format (e.g., FAT, HFS, NTFS and/or the like) that allows for compatibility with various devices, but that also allows for files to be stored in a manner that allows for convenient retrieval. In at least one embodiment, files are stored in a conventional FAT-32 type file system, with files larger than the standard file limit (e.g., approximately four gigabytes or so) broken into smaller files that can be reassembled at media player 102 based upon information contained in a metadata file that may also be stored on media 106 (or in any other location accessible to media catcher 102).

In many embodiments, media catcher 102 includes an a wireless or other input interface 207 that receives wireless infrared or other radio frequency (RF) instructions from remote control 107. Input interface 207 may alternately or additionally communicate with any number of buttons, sliders, knobs or other physical input devices located on a housing of device 102. In operation, user instructions provided by remote control 107 and/or any other input features are received at input interface 207 for subsequent processing by control logic 205. In various embodiments, control logic 205 takes appropriate actions based upon the particular inputs received; examples of appropriate actions may include directing display processor 218 to generate or modify the presented imagery, directing a command packet to be sent to a remotely-located content source, and/or any other actions. In various embodiments, interface 207 is implemented with a conventional infrared (or other RF) receiver chip that may communicate with processor 203 using any sort of internal or external control logic. In at least one embodiment, an NXP model P89LPC921 microcontroller or the like could be used to inter-link processor 203 with a conventional wireless receiver chip such as a model NJL31V367A Infrared Remote Control Receiver available from the New Japan Radio Co., Ltd. Other embodiments, however, could use any sort of wireless or hardwired interface that includes any sort of hardware and/or software logic other than the examples presented above.

Transport stream select module 212 is any hardware and/or software logic capable of selecting a desired media stream from the available sources. In the embodiment shown in FIG. 2A, transport select module 212 is able to select video signals for presentation on one or more output interfaces 228. Stream select module 212 therefore responds to viewer inputs (e.g., via control logic 205) to simply switch content received from a network source 210 or from storage 106 to one or more display processing modules 218. In embodiments (such as the example shown in FIG. 2A) wherein the video decoding feature is provided within processor 203, transport stream selection may be primarily implemented in software, firmware, and/or other intra-chip logic. Other embodiments, however, may provide one or more separate video decoder chips other than processor 203. Such embodiments may include any sort of video switching circuitry and/or logic to route incoming signals from the source (e.g, network interface 210 or storage interface 206) to the appropriate decoding feature.

Display processor module 218 includes any appropriate hardware, software and/or other logic to create desired screen displays at interface 228 as desired. In various embodiments, display processor module 218 is able to decode and/or transcode the received media to produce a displayable format that can be presented at display interface 228. The generated displays, including received/stored content and any other displays may then be presented to one or more output interfaces 228 in any desired format. In various embodiments, display processor 218 produces an output signal encoded in any standard format (e.g., ITU656 format for standard definition television signals or any format for high definition television signals) that can be readily converted to standard and/or high definition television signals at interface 228. Such signals may be provided from processor 203 to one or more display interfaces 228 as, for example, conventional luma/chroma (Y/C) signals having any resolution (e.g., 10-12 bits or so, although other embodiments may vary significantly)

Display processing module 218 may also be able to produce on screen displays (OSDs) for electronic program guide, setup and control, input/output facilitation user interface imagery and/or other features that may vary from embodiment to embodiment. Such displays are not typically contained within the received or stored broadcast stream, but are nevertheless useful to users in interacting with device 102 or the like. In particular, on-screen displays may be used to generate user interface imagery that allows for convenient program selection, control and the like, as described more fully below.

Display interface 228 is any circuitry, module or other logic capable of providing a media output signal to display 104 in an appropriate format for display to a user. Interface 228 therefore converts the received signals from processor 203 to a format that is directly presentable to display 104. In various embodiments, display interface 228 incorporates conventional video processing logic (e.g, an NXP model PNX8510HW/B1 video processing chip or the like) to produce conventional composite (RGB), component, audio and/or other output formats. Such signals may be provided through a conventional low pass filter or the like for noise filtering, if desired. Other embodiments may additionally or alternately include a conventional HDMI transmitter (e.g., an NXP model TDA9982A HDMI transmitter or the like) to provide output signals in an HDMI format. Still other embodiments may provide appropriate interfaces 228 for S-video, Digital Visual Interface (DVI), IEEE 1394, Sony/Philips Digital Interconnect Format (SPDIF) and/or other formats as desired.

A typical implementation of media catcher 102 may also incorporate conventional power supply, memory access, crystal/clock generation, inter-chip control (e.g., I2C, I2S and/or the like), universal asynchronous receiver/transmitter (UART) or similar external access features, and/or any other features typically provided for operation of a consumer or other electronics device. These features, although not expressly shown in FIG. 2A, may be implemented using any conventional techniques presently known or subsequently developed.

In operation, then, the user selects desired media content from a network source (e.g., placeshifting device 112, computer 114, and/or server 120 in FIG. 1) and/or from media 106, and provides appropriate inputs via remote control 107 or the like. The commands are received at input interface 207 and provided to control logic 205, as appropriate. Control logic 205 is then able to contact the appropriate content source via network interface 210, storage interface 206, and/or the like, and to select the desired content using, for example, transport select module 212. The obtained content can then be processed by display processor 218 and received at display interface 228 in an appropriate displayable format so that output signals can be provided to display 104 in a format suitable for presentation to the viewer.

### AN EXEMPLARY MEDIA PROJECTOR SYSTEM

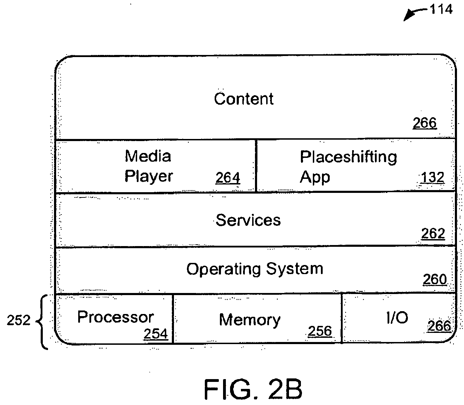

With reference now to FIG. 2B, an exemplary computer system 114 that could be used to provide media projecting or other placeshifting functionality to any sort of media catcher 102 suitably includes a placeshifting application 132 that is able to work with a media player or other application 264 to provide media content 266 via network 110.

In various embodiments, computer system 114 includes conventional hardware features 252 such as a processor 254, memory 256, input/output features 258 and the like. Processor 254 may be any sort of general purpose microprocessor or controller, for example, or any sort of digital signal processor, programmed logic and/or the like. Memory 256 may represent any sort of random access and/or read only memory, as well as any flash or other mass storage memory associated with system 114. Input/output 258 may include any conventional features including any sort of mass storage (e.g., magnetic or optical storage, flash memory storage, and/or the like), input features (e.g., keyboard, mouse, touchpad, etc.), output features (e.g., video display, audio output) and/or any sort of communications capabilities (e.g., a network interface to network 110 or the like). In various embodiments, system 114 is a conventional personal computer-type workstation that stores programs and other instructions in disk, flash or other mass storage. Such programs can be copied to memory 256 as needed prior to execution by processor 254.

Operating system 260 is any conventional operating system that allows various programs executing on system 114 to access the various hardware features 252 described above. Many examples of operating systems are well-known, including the various versions of the WINDOWS operating systems available from the Microsoft Corporation of Redmond, Washington, the UNIX/LINUX operating systems available from a number of open source and proprietary sources, and the MacOS operating system available from the Apple Corporation of Cupertino, California. Any number of alternate embodiments based upon other operating systems and computing platforms could be readily created.

In various embodiments, operating system 260 operates in conjunction with one or more services 262 that provide helpful features to aid in execution of programs on computer system 114. Such services may include abstraction services such as the JAVA or ACTIVE-X products available from Sun Microsystems and the Microsoft Corporation, respectively. Other services may include graphics or other input/output related features such as the DIRECTX/DIRECT3D application programming interface available from the Microsoft Corporation, the Open Graphics Library (OpenGL) product available from numerous sources, the graphics device interface (GDI) product available as part of the Microsoft Windows operating systems, the Intel Integrated Performance Primitives (IPP) library, and/or other services as appropriate. In various embodiments, one or more services 262 may be incorporated into operating system 260 and/or into specific drivers associated with hardware 252 in any manner.

Placeshifting application 132 is any application that processes user inputs and/or media content 266 in any manner to create the media stream 308 that is provided to media catcher 102. In various embodiments, placeshifting application 132 is a conventional software application or applet that resides in memory and/or mass storage on computer system 114 and that provides some or all of the various features described herein. In some implementations, at least a portion of application 132 is initially executed at system startup and remains in system memory during operation of system 114 to facilitate rapid access to media content 266. Other embodiments may execute as a plugin or other enhancement to a conventional web browser program, or as any other sort of application, applet, object, module and/or the like.

The particular features implemented by application 132 may vary from embodiment to embodiment. Typically, application 132 is able to capture at least a portion of the display typically associated with computer system 114, to encode the captured portion of the display, and to transmit the encoded media stream to a remotely-located media catcher 102 as described above. To accomplish these various tasks, application 132 suitably interoperates with other applications and features of system 114 using operating system 260 and/or services 262. Data about media content 266 may be obtained from a video memory or other the like using one or more services 260, for example. This obtained imagery may be encoded, transcoded and/or otherwise processed as desired to create the media stream. The media stream is then transmitted over network 110 using a network interface or other conventional feature, as appropriate.

Placeshifting application 132 may obtain content for media stream 308 in any manner. In various embodiments, placeshifting application 132 communicates with a media player application 264 that receives and renders audio, visual and/or other media content as desired. Media player 264 may be any conventional media player application, including the Windows Media Player program, the iTunes program, any sort of browser program, any sort of plugin or other application associated with any sort of browser program, and/or the like. Such programs typically receive content from a local or remote source and render content for local display. Instead of simply rendering the content on a local display, however, the content may be readily placeshifted to media catcher 102 for remote viewing over network 110. Moreover, in various embodiments, placeshifting application 132 is able to communicate with one or more media players 264 to adjust the contents of the media stream. Application 132 may provide instructions to "play", "pause", "fast forward", "rewind" and/or otherwise manipulate the rendering of content by media player 264, for example. Such commands may be placed via any sort of interprocess communications provided by operating system 260, services 262 and/or other features as appropriate.

In an exemplary embodiment, video information that would typically be displayed on a local display associated with system 114 is stored in bitmap or similar format within video memory associated with hardware 252. By monitoring the information stored in the video memory associated with a window or other portion of the local display that is of interest, the information that would typically be displayed locally can be processed and transmitted over network 110 for remote viewing. This information may be accessed, for example, using conventional DirectX, IPP, DGI, OpenGL and/or other services 262, or in any other manner. In various embodiments, the particular services 262 and/or other resources used to access the video map information may vary from time to time depending upon available hardware, system load, network conditions, characteristics of the content itself, and/or other factors as appropriate. Obtained information may be filtered, encrypted, formatted and/or otherwise processed as desired to create the media stream transmitted over network 110.

Various other features may be provided in any number of alternate embodiments. Some implementations may include a "privacy mode" or other feature that allows a user of computer system 114 to prevent streaming of some or all of the display at certain times. This feature may be activated by activating a button (e.g., an actual button on a keyboard or other device, a "soft" button that is accessible via a graphical user interface on a display associated with computer system 114, or the like) or other control. In the "privacy mode", a pre-determined screen (e.g., a graphical image, blank screen, or the like) may be provided in place of a full-motion stream that may be otherwise provided.

Some embodiments may be operable to encode the video stream provided to the media catcher 102 in any number of different modes. A normal mode, for example, may be designated for conventional video processing, with frame rate, bit rate, resolution and/or any other parameters set to encode video signals. Any number of other modes could be designated for other purposes, such as presentations, photo presentation, audio only streaming, and/or the like. A "presentation" mode, for example, may have a higher resolution than a typical video streaming mode to accommodate additional picture detail and/or the like, but might also have a significantly lower frame rate that would typically be undesirable for video viewing. That is, due to the relatively infrequent changes of presentation slides or still images in comparison to motion video, the image resolution may be increased at the expense of motion frame rate. Any number of other modes could be formulated in a wide array of alternate embodiments. Such modes may be selected from remote control 107, from software executing within system 114, and/or from any other source. In still other embodiments, the particular mode may be determined automatically from the content being streamed to media catcher 102.

Further embodiments may establish encoding and/or other parameters in response to the capabilities of computer system 114. That is, the available RAM, processor speed, video processing capabilities, network processing and transmission capabilities and/or other resources available to system 114 could be used to determine the particular parameters of the encoded media stream. A system 114 with a large amount of available RAM and a fast video processing card, for example, may be able to encode a higher quality video stream than a system 114 with lesser capabilities. Conversely, a computer system 114 with comparatively limited capabilities can be assisted by reducing the resolution, bit rate, frame rate, and/or other encoding parameters of the media stream to reduce computational and other demands placed upon the system. Capabilities may be assessed in any manner (e.g., from a system registry, database and/or the like) and at any time (e.g., at software install and/or startup of application 132). Such default settings may be manually or automatically adjusted in any manner.

Still other embodiments may provide any sort of piracy protection, digital rights management, intellectual property control and/or the like. The well-known MACROVISION protection systems, for example, are commonly used to prevent copying of content stored on DVDs and other media. In various embodiments, placeshifting application 132, media player 264 and/or any other process on system 114 is able to identify protected content and to prevent streaming of such content across network 110. This may be accomplished in various embodiments by communicating with device drivers (e.g., drivers of a CD or DVD drive) to ascertain whether content is protected, and if so, to prevent subsequent streaming.

### AN EXEMPLARY PLACESHIFTING PROCESS

In various embodiments, media catcher 102 is able to transmit control information to a remotely-located media source via network 110 to allow the viewer to adjust or otherwise control the place-shifted media stream. As user instructions are received from remote control 107, for example, control logic 205 or another feature within media catcher 102 may formulate a command request message that is transmitted over network 110 for executing at the remote media source to change the media stream provided for viewing on display 104.

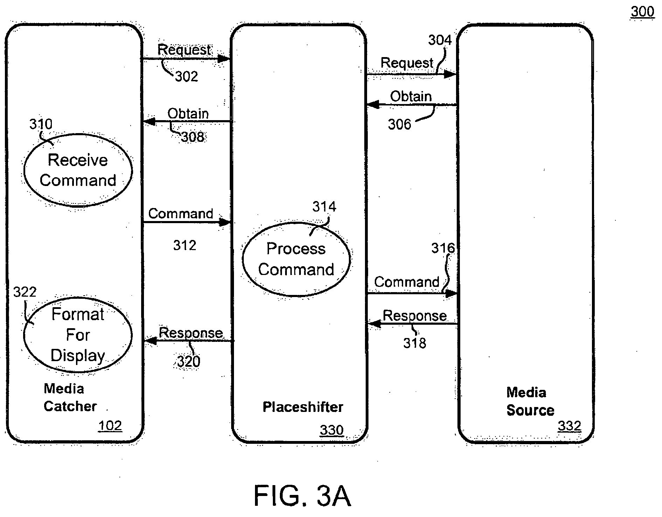

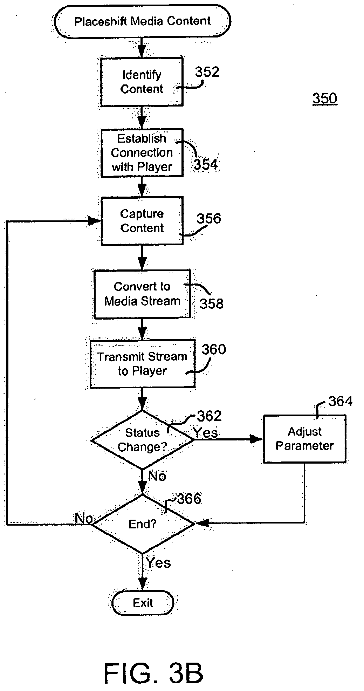

FIG. 3A shows an exemplary process 300 for transmitting command information received at a media catcher 102 for processing at a remote content source, such as media source 115 and/or media player 132. A noted in FIG. 3, media catcher 102 communicates with either a hardware placeshifting device (e.g., placeshifting device 112 in FIG. 1) or a software placeshifting application 132 in virtually the same manner. FIG. 3A therefore shows messages sent and received by various entities 102, 112/132, 115/264 involved in the exemplary process 300, as well as other actions that may be performed by one or more entities within system 100 (FIG. 1). That is, placeshifting application 132 and media player application 264 executing within computer system 114 could equivalently provide the same or similar features as placeshifting device 112 and media source 115, as described more fully below. Placeshifting device 112 and placeshifting application 132 are therefore collectively referenced as "placeshifter 330" and media sources 114 and 264 in FIGS 1 and 2 are collectively references as "media source 332" in FIG. 3A. In practice, the overall process 300 may be implemented with various methods executed by one or more entities 102, 112, 114, and/or 115. Generally speaking, each of the steps and features shown in FIG. 3 may be implemented in software or firmware that may be stored in memory, mass storage or any other storage medium available to the executing device, and that may be executed on any processor or control circuitry associated with the executing device.

With primary reference to FIG. 3A, when a user requests viewing of a video stream from a remote placeshifter 330, media catcher 102 initially requests 302 the content from the placeshifter 330, which in turn requests 304 the content from the appropriate media source 332. While placeshifting device 120 may provide request 304 using, for example, an IR Blaster or other interface as appropriate (see signal 118 in FIG. 1), software implementations of a placeshifting application 132 may provide procedure calls or other messages to the media player application 264 via operating system 260 and/or services 262 (FIG. 2). The media source 332 suitably responds by providing the desired content 306 to the placeshifter 330, which in turn formats the content into a packet stream 308 that can be routed on network 110 to media catcher 102.

If a viewer is watching a program on display 104 that is originating at media source 332, for example, and the viewer wishes to pause, rewind, choose a different program, and/or otherwise change the programming stream 308, the viewer simply depresses the appropriate button(s) on remote 107 to send a wireless message to media catcher 102.

Media catcher 102 receives and processes the command 310 as described above (e.g., using control logic 205 or the like) and then transmits a command message 312 to placeshifter 330 via network 110. This command message 302 may be formatted, for example, in TCP/IP or UDP/IP format, and may have sufficient information contained within the message 302 to direct the remote placeshifter 330 to generate the desired command 316 to media source 332.

Command message 312 is received at placeshifting device 112 and then processed 314 to direct the media source 332 as appropriate. In various embodiments, a placeshifting device 112 may provide a command 316. via an infrared, radio frequency or other interface, although equivalent embodiments could transfer command 316 over any sort of wired interface as well. Software implementations may similarly provide command 316 and/or response 318 in any appropriate manner within operating system 260, services 262 and/or other features within computer system 114. In either case, command 316 generates the desired response 318 from media source 332, which can then be relayed as a modified media stream, command message, and/or other suitable response 320 to media catcher 102.

Content may be rendered or otherwise processed in any manner for presentation on display 104 (function 322). In various embodiments, such processing may involve converting from a streaming or other network-type format (e.g., Windows Media format or the like) to a displayable format (e.g., ITU656 or the like) that can be provided for presentation on display 104. This conversion may be provided by processor 203, for example, by a separate decoder/transcoder chip and/or by any other logic (or combinations of logic) in any number of alternate embodiments.

Other embodiments may operate in any other manner, or may eliminate such remote control functionality entirely. In embodiments that do provide the ability to transfer wireless remote instructions to a remote device over network 110, however, significant improvements to the user experience can be provided. That is, by allowing the user to transmit commands from a remote control 107 and receive results from a remotely-located media source 332, significant flexibility and convenience can be obtained.

FIG. 3B is an exemplary process 350 that may be used to place shift or otherwise project media content from a computer system 114 to any sort of media catcher 102 via network 110. Process 350 may be implemented in any manner; in various embodiments, each of the steps shown in process 350 may be carried out by hardware, software and/or firmware logic residing within a computer system 114 or the like. Placeshifting application 132, for example, may contain software or firmware logic that is able to be stored in memory, mass storage or any other medium and that is executable on any processor (e.g., processor 254 described above) to carry out the various steps and other features shown in FIG. 3B. To that end, the various modules shown in FIG. 3B may be implemented using software or firmware logic in any manner to create a computer program product as desired. Such software or firmware logic may be stored in any digital storage medium, including any sort of magnetic or optical disk, any sort of flash, random access or read-only memory, or any other storage medium.

Process 350 as shown in FIG. 3B suitably includes the broad steps of identifying the content for the media stream (step 352), capturing the content (step 356), converting the captured content to create the media stream (step 358), and transmitting the stream to media catcher 102 (step 360). Various further embodiments may also allow for establishing a connection with the media catcher 102 (step 354) to pre-establish one or more parameters, and/or adjusting parameters (step 364) as conditions change (step 362) during the media streaming process. Many practical embodiments may modify and/or supplement the exemplary process 350 shown in FIG. 3B in any manner. The various processing steps shown in FIG. 3B may be combined in to common software or firmware modules, for example, and/or the particular logic shown in FIG. 3B may be logically, temporally and/or spatially re-arranged or supplemented in any manner.

As shown in FIG. 3B, process 350 suitably begins with any sort of identification of the media content to be place shifted (step 352). In various embodiments, a user identifies the content using conventional user interface features (e.g., mouse, keyboard, touchpad) commonly associated with computer system 114. A user may indicate that the content displayed in a particular window is to be place shifted, for example. In other embodiments, a portion of a window (e.g., a media screen contained within a web browser) may be manually or automatically identified for placeshifting. If a user is viewing a well-known webpage, for example, a portion of that page that is known to be associated with media imagery can be placeshifted without placeshifting the remainder of the window or the display. The relevant portion may be associated with a media viewer plugin, for example, or may simply be identified from the uniform resource locator (URL) of a webpage or other browser feature. In still other embodiments, a user is able to manually draw a rectangular or other window on the user interface displayed on system 114 to allow the contents of that window to be placeshifted. Drawing the window or otherwise delineating a portion of the display allows the corresponding portion of video memory to be readily identified so that bitmap or other information about the contents of the window can be obtained. Other embodiments may identify the placeshifted content in any other manner, including identification based upon inputs received from the remote media catcher 102 as appropriate. Identifying a portion of the displayed screen can have certain advantages in many embodiments, since restricting the size of the encoded imagery can dramatically reduce the amount of processing resources used to encode the images, thereby improving the user experience.

In various embodiments, a connection is initially established from the media projecting system 114 to the media catcher 102 prior to transmittal of the media stream. This allows for querying of the capabilities and/or capacity of the media player 102, which in turn can be used to ascertain an appropriate frame rate for encoding the media stream. In various embodiments, application 132 identifies media catcher 102 through an intermediating network host or the like, and obtains information from the media catcher 120 regarding an encoding frame rate and/or other parameters. In many embodiments, the initially-received frame rate will remain relatively constant throughout the duration of the media stream, even though encoding bit rate and/or other parameters may vary, as described more fully below. The connection established between computer system 114 and media catcher 102 may be established in any manner, an in accordance with any format. Conventional TCP/IP or UDP/IP constructs may be used, for example, to establish a stream according to any standard or non-standard format, such as Windows Media, Quicktime, MPEG and/or the like.

Content may be captured in any manner (step 356). In various embodiments, the identified content (or the entire monitor display) may be captured from video memory (e.g., VRAM) or the like. Such information may be obtained at any frequency to establish a desired frame rate (e.g., 30 frames/second or so in one embodiment, although other embodiments may use any other sampling rate), and frame data that is obtained may be filtered, compressed, encrypted and/or otherwise processed in any manner. In various embodiments, the frequency at which data is obtained is determined based upon the capacity or capabilities of the remote player, based upon information received in step 354.

As noted above, the size and location of the captured region of the video display may be manually or automatically configured in any manner. Moreover, the size or location of the captured region may change during the streaming session in response to changes in the content, changes in the display, changes in the network and/or changes in the media catcher 102 as appropriate. Black (or other) padding data may be provided if needed to fill in the imagery transmitted and displayed.

The media stream is encoded in any manner (step 358). In various embodiments, the raw video frames captured from video memory may be converted from a conventional bitmap or similar format to a compressed streaming video format suitable for transmission and/or routing on network 110. Examples of such formats could include, without limitation, Windows Media format, Quicktime format, MPEG format, and/or the like. A media encoder module associated with program 132 therefore performs encoding/transcoding on the captured frames as appropriate to create the media stream in the desired format. Compression, encryption and/or other processing may be applied as well.

Audio data may be captured in addition to video data in various embodiments. Audio data may be obtained by creating an audio device driver as part of application 264 or the like. The device driver may be automatically activated when streaming is active so that system sounds are encoded into the media stream transmitted to the remote player 102.

Video, audio and/or any other streams (e.g., control streams) may be combined in any manner and transmitted on network 110 as desired (step 360). In various embodiments, the media stream is packetized into a suitable format and transmitted to media catcher over network 110 in conventional TCP/IP and/or UDP/IP packets, although other embodiments may use any other networking schemes and structures.

The media stream may be adjusted as needed (steps 362, 364). Changes in conditions of network 110, media catcher 102 and/or computer system 114, for example, could result in adjustments to one or more parameters used to encode the media stream to reflect increases or decreases in capacity. The bit rate, bit resolution, size of the captured window, and/or any other parameter could be adjusted to accommodate the changing conditions. If network 110 should become congested during media streaming, for example, the bit rate of the encoded stream could be reduced to reduce traffic on the network and to provide more information in limited available bandwidth. Similarly, if the network 110 should become less heavily utilized during the streaming session, perhaps the bit rate could be increased to take advantage of the newly-available bandwidth and to provide an improved user experience. Bit rate or other parameters may be similarly adjusted in response to processor demands on system 114, or other factors as appropriate. If processor 254 (or a separate video processor, or any other resource) associated with system 114 should become more heavily utilized, for example, the bit rate or another parameter could be reduced to reduce the processing demands created by encoding the higher bit rate. Similarly, the bit rate may be increased during periods of time when the processor (or other resource) is under-utilized to take advantage of the available resources and thereby improve the user experience. By adjusting bit rate independently from frame rate, the user experience can be maintained at an acceptable level despite challenges presented by fluctuating bandwidth and/or changes in processing resources.

System resources may be monitored in any manner to determine when parameter modification should take place (step 362). In various embodiments, a transmit buffer that stores data packets prior to transmission on network 110 can be monitored to determine whether adjustments to one or more encoding parameters are appropriate. If the buffer is observed to be filling faster than it is emptying, for example, then it can be readily assumed that the bit rate could be reduced to prevent overflowing of the buffer. Conversely, if the buffer is underutilized (e.g., the buffer empties at a faster rate than it is filled), then bit rate may be increased, if processing resources are available for the increased bit rate. The particular techniques used to assess whether the buffer is over or under utilized may vary from embodiment to embodiment. One or more virtual "watermarks", for example, could be assigned to the buffer, with changes in bit rate (or other parameters) taking place whenever a watermark is breached. Watermarks could be arbitrarily assigned to 25%, 50% and 75% utilization, for example, with encoding parameters adjusted whenever the buffer utilization increases or decreases past any of these values. The particular watermarks used (as well as the number of watermarks) may vary widely from embodiment to embodiment. Moreover, processor utilization may alternately or additionally be observed independently of network utilization to further determine the appropriate parameter value based upon current conditions.

In still further embodiments, the techniques used to capture and/or encode images may change based upon observed conditions. Video capture may take place using any of several techniques (e.g., using Direct3d constructs, IIP hardware features, and/or GDI interface features) based upon the availability of such features and the relative system load demanded by each one. In some applications, for example, the user may request an image from a video game or the like that requires the use of DirectX constructs for proper video capture. Other implementations, however, may be more efficiently processed using IIP hardware features even though higher level DirectX features are also available. By observing processor utilization and/or buffer fill rates using each of the available services, the most efficient service may be used based upon then-current conditions. Hence, by incorporating the flexibility of modifying one or more encoding parameters in response to observed performance, the user experience may be managed to ensure an adequate experience without over-consumption of system resources.

### EXEMPLARY MEDIA CATCHER INTERFACES

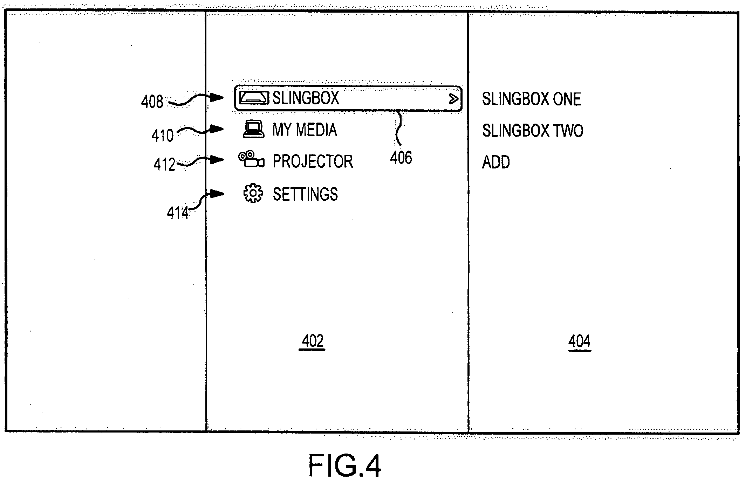

FIGS. 4-8 describe exemplary user interface images that could be used in some embodiments of a media catcher device 102, or in other devices as desired. As noted above, display processor 218 suitably generates interface screens or the like on display 104 in response to instructions from control logic 205. Users can interact with the interface screens by, for example, depressing keys on remote control 107 or the like. In various embodiments, remote control 107 includes directional input (e.g., directional keys, or a touchpad, directional pad, joystick, trackball and/or the like) that allows for movement in one or more dimensions. In a typical embodiment, movement in two or more dimensions is available to allow for movement in two orthogonal dimensions (e.g., up/down, left/right). Many embodiments also provide a "select" or "enter" key that allows for selection of items within a menu tree or other user interface feature. The exemplary interfaces shown in FIGS. 4-8 may be modified or supplemented in any manner. The appearance of the interfaces, for example, could be dramatically altered, as could the various menuing options and features presented. Further, while the exemplary embodiments of FIGS. 4-8 is described within the context of a media catcher 102, these concepts may be equivalently applied to any other type of device, including any sort of set top box, video recorder, video player or other device as desired.

FIG. 4 shows an exemplary interface that includes two or more columns 402, 404, with each column representing one level of a menu tree. Indicator 406 shows a highlighted feature in column 402. In the embodiment shown in FIG. 4, column 402 represents the currently selected menu, with column 404 presenting options that are available from the highlighted elements of column 402. As the user scrolls through the various menu selections available in column 402 by highlighting the various selections in column 402, column 404 displays the various sub-menu options available from the highlighted selection. This allows the user to very rapidly view the many options available in the sub-menu structure in column 404 without actually committing to any particular option in the parent menu shown in column 402.

The exemplary parent menu shown in column 402 of FIG. 4 includes four options corresponding to selecting a placeshifting device 112 (element 408), selecting media from a local storage device (element 410), selecting media from a computer 114 (element 412), and adjusting system settings for media catcher 102 (element 414). In this example, the user has highlighted, but not necessarily selected, the first option (element 408). Even before the user selects option 408, however, column 404 shows the available placeshifting devices 112 (identified as "Slingbox One" and "Slingbox Two" in this example), in addition to the option to add a new placeshifting device to the menu. If the user commits to option 408 (e.g., by depressing the "select" key on remote 107), then the contents of column 404 would typically be moved to column 402, and any sub-menus below the highlighted "SlingBox One", "SlingBox Two" or "Add" features would become visible in column 404. Alternatively, the columns may be shifted only when the selected element has further layers of sub-menus so that the parent menu remains visible in column 402 when the bottom of the menu tree has been reached.

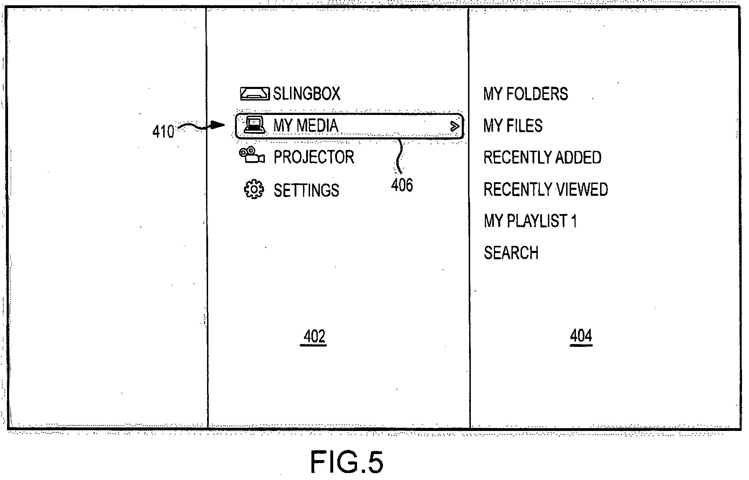

As noted above, the contents of one or more sub-menus can be displayed (e.g., in window 404) without necessarily selecting an option in column 402. In FIG. 4, for example, the viewer may be able to scroll upwardly or downwardly in column 402 to view the various sub-menu features available from the various options 408-414. If the viewer scrolls the indicator 406 downwardly from option 408 to option 410, for example, an exemplary display such as that shown in FIG. 5 may be presented. FIG. 5 shows an exemplary list of options in column 404 (e.g., "My Folders", "My Files", "Recently Added", "Recently Viewed", playlists, search, etc.) that could be associated with files stored on a media 106. While other embodiments may provide additional or other options for each feature in menu 402, the ability to rapidly view sub-options 404 available for each feature allows the viewer to rapidly identify and select a particular feature.

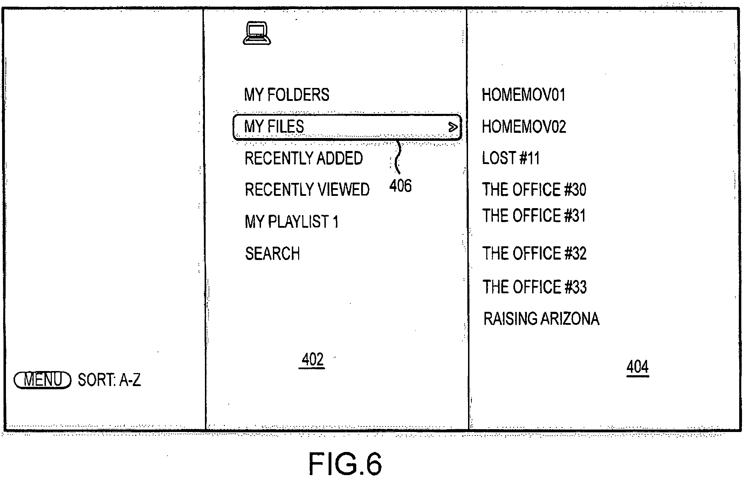

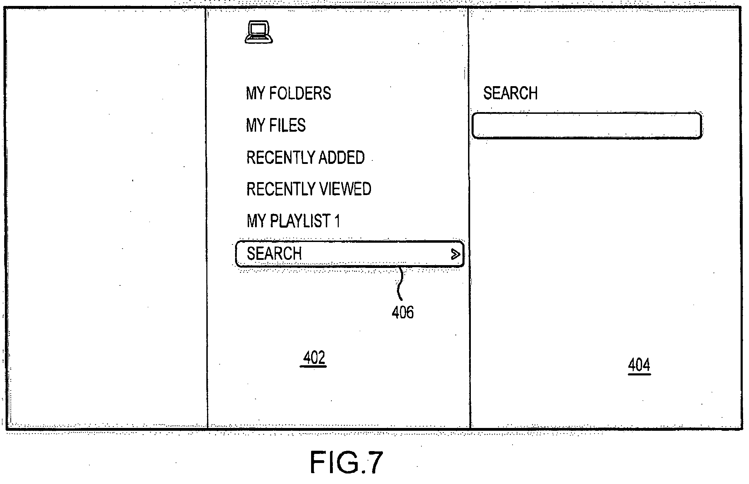

FIG. 6 shows an interface that could result from the viewer selecting the "My Media" feature 410 that was shown in column 402 of FIGS. 4-5. In the exemplary embodiment of FIG. 6, the selection of feature 410 resulted in the contents of column 404 being shifted into column 402 so that these features can be navigated using indicator 406. As described above, the various submenus available from each feature shown in column 402 can be presented in column 404 without necessarily selecting the feature in column 402. FIG. 6, for example, shows a listing of files that can be accessed (e.g., from media 106) under the "My Files" option in column 402. FIG. 7 similarly shows an exemplary interface that could result from scrolling to the "Search" option in column 402, thereby generating a view of a search window or other feature in column 404.

As noted above, scrolling may be conducted in any manner (e.g., in response to directional inputs (e.g., depresses of arrow or other directional keys) received at remote control 107, with selection of any feature occurring in response to the activation of a select key, or any other feature as desired. In some embodiments, vertical movements (e.g., vertical button presses or vertical movements on a touchpad, joystick, directional pad or other input device) could be correlated to scrolling upwardly or downwardly within a particular column 402, and horizontal movements of the same or similar features being correlated to selection inputs, or other movement between columns 402 and 404.

Various other modifications and enhancements could be provided as well. The contents of columns 402 and 404 may be differently shaded, colored or otherwise emphasized, for example, so that the selectable menu element is readily identifiable to the viewer or to otherwise provide selective focus. Similarly, the selector box or feature could be implemented in any manner, such as with a rectangular box and/or by changing the appearance of the highlighted menu, as shown in the various figures.

One advantage of the dual-column menu structure, coupled with menu previewing as described above, is that the viewer is able to very quickly find the contents of the various sub-menus. This is particularly helpful in the context of a media catcher 102 that receives media content from various sources. That is, if a user is looking for a particular program, image, video clip and/or the like, the user can manually search the menu tree very quickly without committing to particular menu options. Moreover, great convenience to the user is facilitated by providing a common menu/interface structure for content located on multiple media sources.

Not only does the common structure allow for ease of use, but in various embodiments, searching for content available across multiple sources can be facilitated. In such embodiments, media catcher 102 suitably maintains a list of files available from the various media sources 115 that can be navigated and/or searched as desired.

In general, text-based searching on set-top devices has been inconvenient because full keyboards are generally not available for such devices, and because on-screen keyboards have traditionally been inconvenient and/or non-intuitive to use. Moreover, many on-screen keyboards are necessarily relatively large relative to the size of the display screen, thereby obscuring much of the information displayed on the screen. To remedy these issues, a compact and easy-to-use text entry technique would be desired.

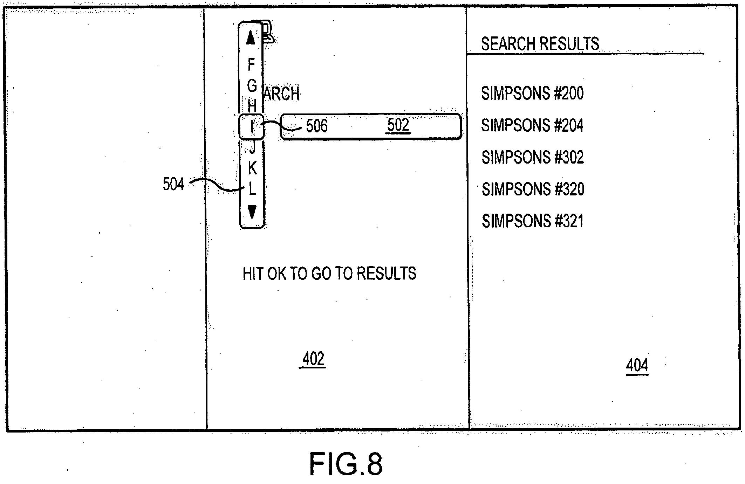

FIG. 8 shows one text-entry technique that may be used on media catcher devices and other devices as appropriate. As shown in FIG. 8, a one-dimensional scrollbar 504 has a highlight portion 506 that indicates a character that can be selected. FIG. 8 shows a vertical implementation of the scrollbar 504; in such embodiments, the user scrolls upwardly or downwardly until the desired letter appears in the highlighted portion 506. In an alternate embodiment, a horizontal scrollbar 504 could be provided and the user would scroll left or right until the desired letter appeared in portion 506; other geometric arrangements or layouts may be contemplated in various equivalent embodiments.

Scrolling in vertical or horizontal directions may be provided in response to any sort of directional input. Inputs received from a touchpad, scrollbar, rocker switch, directional pad, joystick, trackball or other input could be readily correlated to a direction and/or magnitude of scrolling. Discrete or continuous button presses (e.g., presses of an arrow or other directional indicator button) may be similarly used to create the scrolling effect within scrollbar 504. After scrolling to the desired letter for text entry, the user then selects the desired letter by depressing a "select" or "enter" key on remote 107, as appropriate. The selected character may appear in a text entry field 502, and additional character entry may occur, as desired by the user.

In various embodiments, search results are shown in the adjoining column as the user enters text. The search results may be focused or narrowed as additional characters are entered in some embodiments. Column 404, for example, could present files or other features with titles or other characteristics that match the textual data that is already entered by the user. If the user enters the letters "S" and "I", for example, column 404 could show any available content that begins with the letters "SI", as shown in the exemplary embodiment of FIG. 8. In other embodiments, no searching is conducted until the user indicates that text entry is complete.

This basic structure may be supplemented, modified and/or enhanced in any manner. The size of scrollbar 504 may be enlarged or reduced, for example, to show any number of characters (including a single character) and/or to accommodate spatial restrictions on the display.

The scrolling text entry technique has a number of advantages that can be realized in various embodiments. It is readily scalable to multiple character sets, including foreign language sets, for example. If a user selects a foreign language in the "settings" menu, for example, the text entry structure can readily accommodate any additional characters used in the foreign language character set. Further, character sets can be limited to operating contexts. That is, the full alphanumeric set (including, for example, both upper and lower case letters) may not be needed in all instances. Using the techniques described above, unneeded characters can be readily excluded when and where it is appropriate to do so.

In still further embodiments, the basic keyboard input structure can be supplemented by using key inputs from the remote control 107 or the like. For example, users could use a numeric keypad to rapidly skip to particular letters. By associating certain number keys with certain letters (e.g., as seen on many conventional telephones used for text messaging), those letters can be rapidly accessed by simply depressing the number key one or more times if the user does not want to scroll through the entire character set. Other streamlining features could be added in other embodiments.

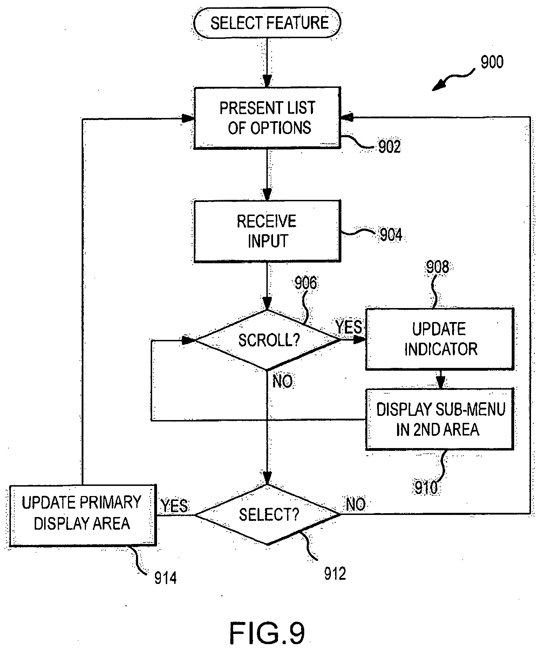

FIG. 9 is an exemplary process 900 that may be used to select a particular feature of a user interface. In some embodiments the particular feature selected may be selection or playback of a media file or program, although other embodiments may provide any other features as appropriate. Process 900 may be implemented in any manner; in various embodiments, each of the steps shown in process 900 may be carried out by hardware, software and/or firmware logic residing within a media catcher device 102 or the like. Controller module 205 (FIG. 2), for example, may contain software or firmware logic that is able to be stored in memory, mass storage or any other medium and that is executable on any processor (e.g., the SoC processor described above) to carry out the various steps and other features shown in FIG. 9.

Process 900 as shown in FIG. 9 suitably includes the broad steps of presenting a list of multiple options in a first area of the interface (step 902), receiving an input from the user (step 904), processing the input to scroll (steps 906, 908) the indicator in the first area of the interface and to update the sub-menu displayed in a second area of the interface (step 910), and processing a selection input (step 912) to update the first area of the interface with the sub-menu options associated with the selected option (step 914). Many practical embodiments may modify and/or supplement the exemplary process shown in FIG. 9 in any manner. The various processing steps may be combined in to common software or firmware modules, for example, and/or the particular logic shown in FIG. 9 may be logically, temporally and/or spatially re-arranged in any manner.

Process 900 suitably begins by displaying a list of options in a first portion of the user interface. FIG. 4, for example, shows a list of various options that are presented within column 402 and that are indicated with indicator 406. Other embodiments may present the first and second areas of the interface in any other manner. The various areas may be re-shaped, re-sized, presented in any spatial layout, and/or otherwise modified as desired. Moreover, it is not necessary that the options presented within the first area of the interface be displayed in a vertical scrolling arrangement; alternate embodiments may provide any sort of horizontal, rotary and/or other arrangement as desired.

Inputs are received as appropriate (step 904). In various embodiments, user inputs are received via remote control 107 or any other device via any sort of input interface (e.g., RF interface 207 in FIG. 2). As noted above, inputs may be directional, alphanumeric or any other types of inputs as desired.

Different types of inputs may be processed in any manner. Scrolling inputs, for example, may be identified (step 906) and processed to update a position of an indicator 406 (step 908) and to display the appropriate sub-menu information in the second area of the interface (step 910). In the embodiment shown in FIG. 4, for example, vertical inputs received from remote control 107 are identified and used to update the position of indicator 406 with respect to the various options presented in column 402. If indicator 406 is initially positioned on the "Slingbox" option shown in FIG. 4, for example, a downward input may move indicator 406 to the "My media" option, as shown in FIG. 5. Additionally, the information presented in the second portion of the interface (e.g., in column 404) may be updated (step 910) based upon the scrolling input to present the sub-menu information associated with the option that is indicated in column 402. As noted above, this sub-menu information may be displayed without the user selecting the particular option in column 404. That is, as the user scrolls within the first area (e.g., column 402), the information in column 404 can be automatically updated without waiting for a "select" input from the user.

When a "select" input is received from the user (step 912), the first and second areas of the interface may be updated in any appropriate manner (step 914). As one example, a user selection of the "My media" option in FIG. 5 could result in the sub-menu information displayed in the second area (e.g., column 404) being subsequently presented in the primary area (e.g., column 402) as shown in FIG. 6. Selection may take place in any manner, such as through the activation of a "select" button on remote 107, a directional input that is orthogonal to the primary scrolling direction (e.g., a horizontal directional input in the example of FIGS. 4-6), or the like.

By allowing the user to view sub-menu information prior to selection of a particular feature, rapid inspection and traversal of the menu tree can be achieved. This can have significant benefit in a wide variety of applications. In the context of a media catcher device 102, for example, a relatively large menu tree that may include a large number of file names, media titles and/or other information which may be obtained from a multitude of disjoint sources can be rapidly traversed to allow the user to quickly find and select a desired option. Moreover, the search features described above with respect to FIG. 8 can be readily incorporated into the menu structure, thereby further increasing the power and flexibility of the interface. Such features may be widely adopted across any type of media catcher, media player, file storage, and/or other devices as desired.

Various examples of media catcher and placeshifting systems, devices and methods have been described. Importantly, this document describes numerous distinct features that could each be implemented separately across a wide variety of embodiments, and it is not necessary that all of these features be found in any single embodiment. Transmission of remote control commands over a network, for example, could be implemented in products other than media catcher 102, as could the dual-column interface and/or search interface features described herein, as could the various media projecting and other placeshifting techniques described herein. Other devices that could make use of such functionality include media players, placeshifting devices, television receivers, satellite or cable set top boxes, and/or many other devices as appropriate. Conversely, various implementations of media catcher devices need not include each of the features described herein.

As used herein, the word "exemplary" means "serving as an example, instance, or illustration." Any implementation described herein as exemplary is not necessarily to be construed as preferred or advantageous over other implementations.

## Claims

1. A method of place shifting moving video content presented on a computer system display to a remotely-located display over a network, the method comprising:
receiving user input identifying (352) a portion of the displayed screen, wherein the portion of the displayed screen comprises video content;
capturing (356) the video content to be place shifted wherein the video content comprises the imagery presented on the identified portion of the computer system display, wherein the capturing comprises capturing frames of raw video data;
converting (358) the captured frames of raw video data into a media stream in a compressed format that is transmittable on the network; and
transmitting (360) the converted media stream on the network for presentation on the remotely-located display.

2. The method of claim 1 wherein the raw video data comprises bitmap data describing the imagery presented on the identified portion of the computer system display that is obtained from a portion of a video memory of the computer system, wherein the portion of the video memory corresponds to the portion of the imagery presented on the local display.

3. The method of claim 1 or 2 wherein the identified portion of the video memory corresponds to a window presented on a display of the computer system, the method further comprising receiving an input from a user that indicates a size and a position of the window.

4. The method of claim 3 wherein the converting comprises encoding the captured media content into the format routable on the network using a configurable parameter.

5. The method of claim 4 further comprising adjusting the configurable parameter in response to a condition of the network.

6. The method of claim 4 or 5 further comprising adjusting the configurable parameter in response to a utilization of a transmit buffer in the computer system.

7. The method of claim 4, 5 or 6 further comprising adjusting the configurable parameter in response to performance of the computer system.

8. The method of claim any of claims 4 to 7 wherein the configurable parameter is a bit rate of the media stream.

9. The method of claim 1 further comprising establishing a connection with a media catcher associated with the remotely-located display for transmitting the media stream over the network at a frame rate specified by the media catcher that remains substantially constant for a duration of the connection.

10. The method of any preceding claim further comprising receiving an instruction from a media catcher associated with the remotely-located display over the network and adjusting the media content in response to the instruction.

11. A system(108) for place shifting moving video content to a remotely-located display over a network, the system comprising:
a first interface (210) to the network;
a second interface (104) to a local display configured to display imagery to a user; and
a processor (203) configured to:
receive user input identifying a portion of the imagery presented on the local display that comprises the video content to be place shifted;
capture the video content to be place shifted, wherein the video content comprises the portion of imagery presented on the local display, wherein the capturing comprises capturing frames of raw video data;
convert the captured frames of raw video data to a media stream in a compressed format that is routable on the network; and
transmit the converted media stream via the first interface for presentation on the remotely-located display.

12. The system of claim 11 wherein the processor is further configured to establish a connection with a media catcher associated with the remotely-located display for transmitting the media stream over the network at a frame rate specified by the media catcher that remains substantially constant for a duration of the connection.

13. The system of claim 12 wherein the system comprises a video memory and wherein the processor is configured to capture the raw video data by obtaining bitmap data describing the user identified portion of the imagery from the video memory at the frame rate to thereby capture frames of the moving video content.

14. A computer program that when executed on a place shifting system causes it to undertake the method of claim 1.

## Patentansprüche

1. Verfahren zum Verlagern von auf einem Computersystem-Display präsentiertem bewegtem Videoinhalt zu einem entfernten Display über ein Netzwerk, wobei das Verfahren Folgendes beinhaltet:
Empfangen von Benutzereingaben, die einen Teil des angezeigten Bildschirms identifizieren (352), wobei der Teil des angezeigten Bildschirms Videoinhalt beinhaltet;
Erfassen (356) des zu verlagernden Videoinhalts, wobei der Videoinhalt die auf dem identifizierten Teil des Computersystem-Display präsentierten Bilder umfasst, wobei das Erfassen das Erfassen von Frames von rohen Videodaten beinhaltet;
Konvertieren (358) der erfassten Frames von rohen Videodaten in einen Medienstrom in einem komprimierten Format, das auf dem Netzwerk übertragen werden kann; und
Übertragen (360) des konvertierten Medienstroms auf dem Netzwerk zur Präsentation auf dem entfernten Display.

2. Verfahren nach Anspruch 1, wobei die rohen Videodaten Bitmap-Daten beinhalten, die die auf dem identifizierten Teil des Computersystem-Display präsentierten Bilder beschreiben, die von einem Teil eines Videospeichers des Computersystems erhalten wurden, wobei der Teil des Videospeichers dem Teil der auf dem lokalen Display präsentierten Bilder entspricht.

3. Verfahren nach Anspruch 1 oder 2, wobei der identifizierte Teil des Videospeichers einem auf einem Display des Computersystems präsentierten Fenster entspricht, wobei das Verfahren ferner das Empfangen einer Eingabe von einem Benutzer beinhaltet, die eine Größe und eine Position des Fensters anzeigt.

4. Verfahren nach Anspruch 3, wobei das Konvertieren das Encodieren des erfassten Medieninhalts in das Format beinhaltet, das unter Verwendung eines konfigurierbaren Parameters auf dem Netzwerk geleitet werden kann.

5. Verfahren nach Anspruch 4, das ferner das Justieren des konfigurierbaren Parameters als Reaktion auf einen Zustand des Netzwerks beinhaltet.

6. Verfahren nach Anspruch 4 oder 5, das ferner das Justieren des konfigurierbaren Parameters als Reaktion auf eine Nutzung eines Übertragungspuffers in dem Computersystem beinhaltet.

7. Verfahren nach Anspruch 4, 5 oder 6, das ferner das Justieren des konfigurierbaren Parameters als Reaktion auf Leistung des Computersystems beinhaltet.

8. Verfahren nach einem der Ansprüche 4 bis 7, wobei der konfigurierbare Parameter eine Bitrate des Medienstroms ist.

9. Verfahren nach Anspruch 1, das ferner das Herstellen einer Verbindung mit einem mit dem entfernten Display assoziierten Media-Catcher zum Übertragen des Medienstroms über das Netzwerk mit einer vom Media-Catcher vorgegebenen Frame-Rate beinhaltet, die für eine Dauer der Verbindung im Wesentlichen konstant bleibt.

10. Verfahren nach einem vorherigen Anspruch, das ferner das Empfangen eines Befehls von einem mit dem entfernten Display assoziierten Media-Catcher über das Netzwerk und das Justieren des Medieninhalts als Reaktion auf den Befehl beinhaltet.

11. System (108) zum Verlagern von beweglichem Videoinhalt zu einem entfernten Display über ein Netzwerk, wobei das System Folgendes umfasst:
eine erste Schnittstelle (210) zu dem Netzwerk;
eine zweite Schnittstelle (104) zu einem lokalen Display, das zum Anzeigen von Bildern einem Benutzer konfiguriert ist; und
einen Prozessor (203), konfiguriert zum:
Empfangen von Benutzereingaben, die einen Teil der auf dem lokalen Display präsentierten Bilder identifizeren, der den zu verlagernden Videoinhalt umfasst;
Erfassen des zu verlagernden Videoinhalts, wobei der Videoinhalt den auf dem lokalen Display präsentierten Teil von Bildern umfasst, wobei das Erfassen das Erfassen von Frames von rohen Videodaten beinhaltet;
Umwandeln der erfassten Frames von rohen Videodaten in einen Medienstrom in einem komprimierten Format, das auf dem Netzwerk geleitet werden kann; und
Übertragen des konvertierten Medienstroms über die erste Schnittstelle zur Präsentation auf dem entfernten Display.

12. System nach Anspruch 11, wobei der Prozessor ferner zum Herstellen einer Verbindung mit einem mit dem entfernten Display assoziierten Media-Catcher zum Übertragen des Medienstroms über das Netzwerk mit einer von dem Media-Catcher vorgegebenen Frame-Rate konfiguriert ist, die für eine Dauer der Verbindung im Wesentlichen konstant bleibt.

13. System nach Anspruch 12, wobei das System einen Videospeicher umfasst und wobei der Prozessor zum Erfassen der rohen Videodaten durch Einholen von Bitmap-Daten konfiguriert ist, die den vom Benutzer identifizierten Teil der Bilder aus dem Videospeicher mit der Frame-Rate beschreiben, um dadurch Frames des bewegten Videoinhalts zu erfassen.

14. Computerprogramm, das bei Ausführung auf einem Verlagerungssystem bewirkt, dass es das Verfahren nach Anspruch 1 ausführt.

## Revendications

1. Procédé de déplacement de contenu vidéo en mouvement présenté sur un affichage de système informatique à un affichage à distance sur un réseau, le procédé comprenant :
recevoir une entrée utilisateur identifiant (352) une partie de l'écran affiché, où la partie de l'écran affiché comprend un contenu vidéo;
saisir (356) le contenu vidéo à déplacer où le contenu vidéo comprend l'imagerie présentée sur la partie identifiée de l'affichage de système informatique, où la saisie comprend saisir des trames de données vidéo brutes;
convertir (358) les trames saisies de données vidéo brutes en un flux de média dans un format comprimé qui est transmissible sur le réseau ; et
transmettre (360) le flux de média converti sur le réseau pour présentation sur l'affichage à distance.

2. Procédé selon la revendication 1, dans lequel les données vidéo brutes comprennent des données en mode point décrivant l'imagerie présentée sur la partie identifiée de l'affichage de système informatique qui est obtenue d'une partie d'une mémoire vidéo du système informatique, où la partie de mémoire vidéo correspond à la partie de l'imagerie présentée sur l'affichage local.

3. Procédé selon la revendication 1 ou 2, dans lequel la partie identifiée de la mémoire vidéo correspond à une fenêtre présentée sur un affichage du système informatique, le procédé comprenant en outre recevoir une entrée d'un utilisateur qui indique une taille et une position de la fenêtre.

4. Procédé selon la revendication 3, dans lequel la conversion comprend coder le contenu média saisi en le format pouvant être acheminé sur le réseau en utilisant un paramètre configurable.

5. Procédé selon la revendication 4, comprenant en outre ajuster le paramètre configurable en réponse à une condition du réseau.

6. Procédé selon la revendication 4 ou 5, comprenant en outre ajuster le paramètre configurable en réponse à une utilisation d'une mémoire tampon de transmission dans le système informatique.

7. Procédé selon la revendication 4, 5 ou 6 comprenant en outre ajuster le paramètre configurable en réponse à la performance du système informatique.

8. Procédé selon l'une quelconque des revendications 4 à 7, dans lequel le paramètre configurable est un débit binaire du flux de média.

9. Procédé selon la revendication 1, comprenant en outre établir une connexion avec un acquéreur de média associé à l'affichage à distance pour transmettre le flux de média sur le réseau à un débit de trames spécifié par l'acquéreur de média, lequel demeure sensiblement constant pendant une durée de la connexion.

10. Procédé selon l'une quelconque des revendications précédentes, comprenant en outre recevoir une instruction d'un acquéreur de média associé à l'affichage à distance sur le réseau et ajuster le contenu média en réponse à l'instruction.

11. Système (108) pour déplacer un contenu vidéo en mouvement à un affichage à distance sur un réseau, le système comprenant :
une première interface (210) avec le réseau ;
une deuxième interface (104) avec un affichage local configuré pour afficher une imagerie à un utilisateur ; et
un processeur (203) configuré pour :
recevoir une entrée utilisateur identifiant l'imagerie présentée sur l'affichage local qui comprend le contenu vidéo à déplacer ;
saisir le contenu vidéo à déplacer, où le contenu vidéo comprend la partie de l'imagerie présentée sur l'affichage local, où la saisie comprend saisir des trames de données vidéo brutes ;
convertir les trames saisies de données vidéo brutes en un flux de média dans un format comprimé qui peut être acheminé sur le réseau ; et
transmettre le flux de média converti par l'intermédiaire de la première interface pour présentation sur l'affichage à distance.

12. Système selon la revendication 11, dans lequel le processeur est configuré en outre pour établir une connexion avec un acquéreur de média associé à l'affichage à distance pour transmettre le flux de média sur le réseau à un débit de trames spécifié par l'acquéreur de média, lequel demeure sensiblement constant pendant une durée de la connexion.

13. Système selon la revendication 12, où le système comprend une mémoire vidéo et où le processeur est configuré pour saisir les données vidéo brutes en obtenant des données en mode point décrivant la partie identifiée par l'utilisateur de l'imagerie de la mémoire vidéo au débit de trames afin de saisir ainsi des trames du contenu vidéo en mouvement.

14. Programme informatique qui lorsque exécuté sur un système de déplacement fait qu'il mette en oeuvre le procédé selon la revendication 1.
